# EUROPÄISCHE PATENTANMELDUNG

(11) **EP 2 781 874 A2**
(43) Veröffentlichungstag der Anmeldung: **24.09.2014**
(21) Anmeldenummer: 13192852.5
(22) Anmeldetag: 14.11.2013
(51) Int. Cl.: F41G 1/38

(54) **Zielfernrohr**

(30) Priorität: 19.03.2013 DE 102013102826
(71) Anmelder: Schmidt & Bender GmbH & Co. KG, 35444 Biebertal (DE)
(72) Erfinder: Karen Hesse, Helke, 35934 Giessen (DE); Gerlach, Karlheinz, 35444 Biebertal (DE); Kalmbach, Anastasia, 35576 Wetzlar (DE); Schmidt, Manuel, 35576 Wetzlar (DE)
(74) Vertreter: Patentanwälte Olbricht Buchhold Keulertz

(57) **Zusammenfassung**

Ein Zielfernrohr (10) hat ein Objektivlinsensystem (14), ein Okularlinsensystem (18) und ein im Strahlengang zwischen dem Objektivlinsensystem (14) und dem Okularlinsensystem (18) angeordnetes Umkehrsystem (20), wobei das Umkehrsystem (20) mittels einer Höhenverstelleinrichtung (30) und einer Seitenverstelleinrichtung (40) relativ zur optischen Achse (A) des Zielfernrohrs (10) verschwenkbar gelagert ist. Das Zielfernrohr (10) hat ferner eine erste Visierhilfe in Form eines Absehen (50), das am objektivseitigen Ende (21) des Umkehrsystems (20) angeordnet ist, und eine zweite Visierhilfe in Form einer Projektionsvorrichtung (60), die am okularseitigen Ende (22) des Umkehrsystems (20) angeordnet ist. Um beim Einblenden von ballistischen Informationen und/oder elektronischen Zielmarken Projektionsfehler, insbesondere Parallaxe, zu vermeiden und um bei einem Ausfall der elektronischen Komponenten ein voll funktionsfähiges Zielfernrohr zu erhalten, ist vorgesehen, dass das Umkehrsystem (20) am okularseitigen Ende (22) eine Bildebene (BU) erzeugt, die senkrecht zur optischen Achse (a) des Umkehrsystems (20) ausgerichtet ist, dass die Projektionsvorrichtung (60) im Sehfeld des Zielfernrohrs (10) eine Projektion erzeugt, die in einer Projektionsebene (63) liegt, wobei die Projektionsebene (63) senkrecht zur optischen Achse (a) des Umkehrsystems (20) ausgerichtet ist und in der Bildebene (BU) des Umkehrsystems (20) liegt, und dass dem Umkehrsystem (20) eine Anzeigeeinrichtung (70) zugeordnet ist, die über die Projektionsvorrichtung (60) in der Projektionsebene (63) eine Information und/oder eine elektronisch generierte Zielmarke erzeugt.

## Beschreibung

Die Erfindung betrifft ein Zielfernrohr gemäß dem Oberbegriff von Anspruch 1.

Zielfernrohre verfügen gewöhnlich zwischen einem Okular- und einem Objektivlinsensystem über eine oder mehrere im Strahlengang sichtbare Visierhilfen, welche je nach Konstruktionsart in der ersten, objektivseitigen Bildebene und/oder in der zweiten, okularseitigen Bildebene des Zielfernrohrs vorgesehen sind. Zwischen den beiden Bildebenen ist üblicherweise ein optisches Umkehrsystem angeordnet. Dieses dient zum einen dazu, das auf dem Kopf stehende und seitenverkehrte Bild aufzurichten. Zum anderen kann durch das Umkehrsystem eine variable Vergrößerung des Zielfernohrs erreicht werden.

Im Stand der Technik sind verschiedene Arten von Visierhilfen bekannt. Bei einer Visierhilfe kann es sich beispielsweise um ein Absehen handeln, das häufig als Strichplatte ausgebildet ist, deren Strukturierung verschiedene Muster aufweisen kann. Eine besonders geläufige Ausgestaltung ist das Fadenkreuz. Neben dieser schlichten Gestaltungsweise sind auch komplexere Arten von Absehen bekannt. Diese können beispielsweise Merkmale aufweisen, welche die Abschätzung der Zielentfernung erleichtern. Um auch bei schlechten Lichtverhältnissen und in der Dämmerung eine zufriedenstellende Erkennbarkeit des Absehens auf dem Zielbild zu gewährleisten werden Beleuchtungseinrichtungen verwendet.

Bei einer in DE 299 03 989 U1 offenbarten Visierhilfe ist im Strahlengang zwischen dem Okular-und dem Objektivlinsensystem in einem Führungsrohr ein Umkehrsystem angeordnet, das mittels einer Höhen- und Seitenverstellung gegenüber der optischen Achse des Zielfernrohrs schwenkbar gelagert ist. Am objektivseitigen Ende der Führungshülse ist eine Fassung ausgebildet, die ein Absehen und einen Strahlenteiler aufnimmt. Das Absehen weist Markierungen in Form eines Fadenkreuzes auf, während der Strahlenteiler mittels einer Projektionseinrichtung eine zusätzliche leuchtende Zielmarke erzeugt, die von der Höhen- und Seitenverstelleinrichtung des Zielfernrohrs mit bewegt wird. Die Visierhilfen weisen damit für den Schützen immer dieselben Abstände, Neigungswinkel und Abmessungen auf. Allerdings ist es nicht möglich, neben der Zielmarke weitere Informationen oder Visierhilfen in den Strahlengang einzublenden. Ferner ist es nicht möglich, die von der Projektionseinrichtung erzeugte Zielmarke in Abhängigkeit von ballistischen Daten oder Bedingungen zu verändern bzw. anzupassen oder zu bewegen, was den Einsatzbereich des Zielfernrohrs einschränkt.

Damit die von der Projektionseinrichtung und dem Strahlteiler erzeugte Zielmarke beim Verstellen der Vergrößerung des Zielfernrohrs über das Umkehrsystem das Zielobjekt nicht verdeckt, ordnet DE 10 2010 005 122 A1 den im Strahlengang zwischen Okular- und Objektivlinsensystem liegenden Strahlenteiler am okularseitigen Ende der Führungshülse des Umkehrsystems an. Das Absehen ist als Strichplatte am gegenüberliegenden objektivseitigen Ende der Führungshülse des Umkehrsystems angeordnet. Von Nachteil ist auch hier, dass neben der Zielmarke keine weiteren Informationen oder Visierhilfen in den Strahlengang eingeblendet werden können. Weder das Absehen noch die von der Projektionseinrichtung erzeugte Zielmarke lassen sich zudem in Abhängigkeit von ballistischen Daten oder Bedingungen verändern bzw. anpassen oder bewegen, so dass der Einsatzbereich und die Funktionalität des Zielfernrohrs beschränkt sind.

Ein in DE 199 49 800 A1 offenbartes Zielfernrohr verwendet zum Abschätzen der Entfernung zwischen dem Schützen und dem Ziel einen Laser-Entfernungsmesser, der über ein erstes, im Strahlengang liegendes Prisma einen Laserstrahl aussendet und über ein gleichfalls im Strahlengang liegendes Empfängerprisma die von dem Zielobjekt reflektierte Lichtstrahlen einfängt. Ein Mikroprozessor führt anhand der gemessenen Entfernung und anhand zuvor durch den Schützen gespeicherter ballistischer Daten eine Kompensationsberechnung durch, so dass man eine Entfernung des Ziels und eine Flugbahnkompensation erhält. Beide Informationen werden mittels eines weiteren Strahlenteilers, der gleichfalls zwischen dem Objektivlinsensystem und dem Umkehrsystem angeordnet ist, in der ersten Bildebene angezeigt. Das Umkehrsystem ermöglicht die Einstellung verschiedener Vergrößerungen, wodurch das Bild des Ziels und der erforderliche Wert der Kompensation richtig und ohne Verzerrung vergrößert werden. Problematisch hierbei ist jedoch, dass beim Verstellen der Vergrößerung des Zielfernrohrs nicht nur die Zielmarke, sondern auch die eingeblendeten Informationen das Ziel verdecken, was insbesondere bei großen Vergrößerungen hinderlich ist. Hinzu kommt, dass im Falle eines Abschaltens oder Ausfalls der Elektronik eine Flugbahnkompensation nicht mehr vorgenommen werden kann, weil die dazu notwendigen Informationen und Hilfsmittel fehlen. Die Prismen im Strahlengang jedoch können zu einer Abschattung im Sehfeld führen und dieses einschränken, was für den Gebrauch des Zielfernrohrs von Nachteil ist.

DE 30 48 534 A1 verzichtet gänzlich auf mechanische bzw. mechanisch verstellbare Absehen und verwendet eine elektronische Anzeigeneinrichtung, die von einer Elektronik angesteuert wird und anhand von Entfernungsdaten und anderen Informationen die jeweils optimale Zielmarke im Visier sichtbar macht. Die Anzeige umfasst Leuchtdioden oder man verwendet eine Flüssigkristallanzeige. Darüber hinaus können auch die effektiven Werte der Entfernung, des Vorhaltes u.dgl. für den Schützen im Sichtfeld des Zielfernrohrs eingeblendet werden. Fällt jedoch bei einem solchen Visier die elektronische Anzeigeeinrichtung aus, ist keinerlei Visierhilfe mehr vorhanden.

Ziel der Erfindung ist es, diese und weitere Nachteile des Standes der Technik zu überwinden und ein Zielfernrohr zu entwickeln, das mittels einer elektronischen Anzeigeeinrichtung zuverlässige Informationen in das Sehfeld einspiegelt und bei Bedarf ein elektronisch veränderbares Absehen erzeugt, das jedoch unabhängig von allen elektronischen Komponenten über mechanische und optische Funktionen eines Zielfernrohrs verfügt, die es ermöglichen, eine Entfemungsabschätzung und eine Geschossbahnkompensation durchzuführen. Angestrebt wird ferner ein kostengünstiger und robuster Aufbau des Zielfernrohrs.

Hauptmerkmale der Erfindung sind im kennzeichnenden Teil von Anspruch 1 angegeben. Ausgestaltungen sind Gegenstand der Ansprüche 2 bis 15.

Bei einem Zielfernrohr mit einem Objektivlinsensystem, einem Okularlinsensystem und mit einem im Strahlengang zwischen dem Objektivlinsensystem und dem Okularlinsensystem angeordneten Umkehrsystem, das mittels einer Höhenverstelleinrichtung und einer Seitenverstelleinrichtung relativ zur optischen Achse des Zielfernrohrs verschwenkbar gelagert ist, mit einem Absehen, das am objektivseitigen Ende des Umkehrsystems angeordnet ist, und mit einer Projektionsvorrichtung, die am okularseitigen Ende des Umkehrsystems angeordnet ist, sieht die Erfindung vor, dass das Umkehrsystem am okularseitigen Ende eine Bildebene erzeugt, die senkrecht zur optischen Achse des Umkehrsystems ausgerichtet ist, dass die Projektionsvorrichtung im Sehfeld des Zielfernrohrs eine Projektion erzeugt, die in einer Projektionsebene liegt, wobei die Projektionsebene senkrecht zur optischen Achse des Umkehrsystems ausgerichtet ist und in der Bildebene des Umkehrsystems liegt, und dass dem Umkehrsystem eine Anzeigeeinrichtung zugeordnet ist, die über die Projektionsvorrichtung in der Projektionsebene eine Information und/oder eine elektronisch generierte Zielmarke erzeugt.

Damit wird der Ort der Projektion sowohl für die Informationen als auch für die elektronisch generierten und veränderbaren Zielmarken stets in die rückseitige Bildebene des Umkehrsystems gelegt, die relativ zur optischen Achse des Umkehrsystems stets fest angeordnet ist, d.h. der Ort der Projektion liegt - unabhängig von einem Verkippen oder Verschwenken des Umkehrsystems mittels der Höhen- und Seitenverstelleinrichtung relativ zur optischen Achse des Zielfernrohrs - stets senkrecht zur optischen Achse des Umkehrsystems und planparallel innerhalb der rückwärtigen Bildebene des Umkehrsystems, so dass Zielmotiv und Projektionsbild stets gemeinsam mit dem Umkehrsystem verkippt bzw. verschwenkt werden. Selbst zum Rand des Linsensystems hin können damit keine Treffpunktabweichungen mehr auftreten. Zugleich bietet die erfindungsgemäße Lösung zahlreiche Nutzungsoptionen, die je nach Einsatzzweck des Zielfernrohrs genutzt werden können.

Beispielsweise besteht die Möglichkeit reine Informationen in die zweite Bildebene des Zielfernrohrs einzubringen. Dieser Ansatz ermöglicht es dem Schützen, Informationen, die wahlweise von in das Zielfernrohr integrierten Geräten (z.B. einem Laser-Entfernungsmesser) oder von extern ankoppelbaren Geräten übermittelt werden, im Sehfeld in Höhe der zweiten Bildebene des Zielfemrohres zu sehen.

Ergänzend oder alternativ besteht die Möglichkeit, mittels der Anzeigeeinrichtung eine elektronische bewegliche Zielmarke zu erzeugen. Dieser Ansatz ermöglicht es dem Schützen anhand von Informationen, die wahlweise von in das Zielfernrohr integrierten Geräten (z.B. einem Laser-Entfernungsmesser) oder von extern ankoppelbaren Geräten übermittelt werden, eine automatische Zielmarkenkorrektur vorzunehmen.

Weil jedoch die von der Anzeigeeinrichtung erzeugten und über die Projektionsvorrichtung in der Projektionsebene dargestellten Informationen und/oder Zielmarken nicht unbeweglich und starr in einer Position in der zweiten, okularseitigen Bildebene des Okularlinsensystems verbleiben, sondern mit dem eigentlichen Bild des Zielfernrohres in der okularseitigen Bildebene des Umkehrsystems mit bewegt werden, wenn im Rahmen einer Geschossbahnkorrektur das Umkehrsystem relativ zur optischen Achse des Zielfernrohrs verkippt wird, ist es möglich Informationen und Zielmarken zu realisieren, die sich stets synchron und deckungsgleich mit dem Bild bewegen. Bevorzugt liegen dabei die Mittelpunkte der Bildebenen des Okularlinsensystems und des Umkehrsystems sowie der Projektionsebene der Projektionsvorrichtung deckungsgleich übereinander.

Sollte jedoch die Elektronik ausgeschaltet werden oder gar vollständig ausfallen, kann über die weiterhin vorhandene Höhen- und Seitenverstellung das objektivseitige Absehen in herkömmlicher Weise für eine notwendige Geschossbahnkorrektur genutzt werden. Das erfindungsgemäße Zielfernrohr ist damit jederzeit und unter allen noch so widrigen Umständen einsetzbar, insbesondere für den Einsatz beim Militär, weil stets eine vollständig funktionsfähige Backup-Lösung vorhanden ist, sollte die Elektronik versagen oder ausfallen.

Eine wichtige Ausgestaltung der Erfindung sieht vor, dass die Projektionsvorrichtung von zwei Prismen gebildet ist, die mit gegenüber der optischen Achse des Umkehrsystems geneigten Basisflächen unmittelbar aneinander anliegenden, wobei die Basisflächen eine halbdurchlässige Grenzfläche bilden. Eine solche Prismen-Anordnung ist gewöhnlich ein Strahlteiler, der einfach und kostengünstig bereitgestellt werden kann. Die Prismen haben ferner den Vorteil, dass das vom Objektiv einfallende Licht kaum absorbiert oder reflektiert wird. Die Zieloptik weist daher auch bei schlechten Sichtverhältnissen eine gute Zielbildqualität auf.

Von Vorteil ist ferner, wenn eine dem Objektivlinsensystem zugewandte Stirnseite eines Prismas die Projektionsebene bildet. Diese lässt sich über das Prisma präzise anordnen und exakt zur optischen Achse des Umkehrsystems ausrichten.

Konstruktiv ist es weiter günstig, wenn die Anzeigeneinrichtung mit einem der Prismen der Projektionseinrichtung verbunden ist. Die Anzeigeeinrichtung und die Prismen bilden dadurch eine stabile Einheit, die zudem einen nur geringen Bauraum benötigt.

Eine wichtige Weiterbildung der Erfindung sieht vor, dass die Projektionsvorrichtung und/oder die Anzeigeeinrichtung relativ zur optischen Achse des Umkehrsystems justierbar ausgebildet sind, vorzugsweise entlang der optischen Achse des Umkehrsystems. Dadurch ist es möglich, die von der Anzeigeeinrichtung generierte Bilddarstellung stets optimal in der Projektionsebene der Projektionsvorrichtung zu fokussieren, damit sich für den Schützen im Sehfeld des Zielfernrohrs eine klare und scharfe Darstellung ergibt.

Wichtige Vorteile der Erfindung ergeben sich ferner, wenn die Projektionsvorrichtung und die Anzeigeeinrichtung in einer gemeinsamen Fassung angeordnet sind, die mit dem Umkehrsystem verbunden ist. Damit werden die Stabilität und die Belastbarkeit weiter erhöht. Zudem ist es günstig, wenn die Fassung relativ zum Umkehrsystem und zur optischen Achse des Umkehrsystems justierbar ausgebildet ist, vorzugsweise entlang der optischen Achse des Umkehrsystems. Dadurch ist es besonders einfach möglich, die von der Anzeigeeinrichtung generierte und von der Projektionsvorrichtung erzeugte Bilddarstellung im Strahlengang des Zielfernrohrs optimal zu justieren und zu fokussieren, damit sich für den Schützen im Sehfeld des Zielfernrohrs eine stets klar erkennbare und scharfe Darstellung ergibt. Damit sich das von der Anzeigeeinrichtung und der Projektionseinheit erzeugte Bild im Sehfeld des Zielfernrohrs nicht verdreht, sind zumindest die Projektionsvorrichtung und die Anzeigeeinrichtung drehfest zur optischen Achse des Zielfernrohrs bzw. des Umkehrsystems ausgebildet.

Weitere konstruktive Vorteile ergeben sich, wenn die Projektionsvorrichtung, die Anzeigeeinrichtung und/oder die Fassung eine bauliche Einheit bilden Letztere kann als vormontierte Einheit konzipiert werden, was die Montage vereinfacht und sich weiter günstig auf die Herstellkosten des Zielfernrohrs auswirkt.

Um die gewünschten oder notwendigen Informationen für den Schützen generieren zu können, ist die Anzeigeneinrichtung von einer programmierbaren elektronischen Steuereinrichtung angesteuert, die anhand ballistischer und/oder sonstiger Daten eine Kompensationsberechnung der Flugbahn durchführt. Die hierfür notwendigen Daten können über Messeinrichtungen und Sensoren ermittelt werden, die in dem Zielfernrohr integriert sind. Zudem besteht die Möglichkeit, Daten oder Informationen über eine geeignete Eingabevorrichtung in die Steuereinrichtung einzugeben, die vorzugsweise mit einem Mikroprozessor und einem Speicher versehen ist, um die ermittelten, eingegebenen und/oder berechneten Daten speichern und über die Anzeigeeinrichtung wiedergeben zu können. Für die Ermittlung von Daten, wie beispielsweise Entfernung, Windgeschwindigkeit, Schussrichtung u.dgl., können auch externe Geräte und Sensoren verwenden werden, die ihre Informationen und Daten an den Mikroprozessor der Steuereinrichtung weiter leiten. Hierfür weist die Steuereinrichtung eine Schnittstelle zur Übernahme der Daten auf. Diese Schnittstelle kann eine Steckverbindung sein, die den raschen und bequemen Anschluss externer Geräte ermöglicht. Man kann die Daten und die berechneten Werte aber auch per Funk austauschen. Die Steuereinrichtung ist hierzu mit einem geeigneten Sender und Empfänger versehen.

In einer weiteren Ausgestaltung der Erfindung ist die Steuereinrichtung über eine kabelgebundene oder eine kabellose Verbindung mit der Anzeigeeinrichtung verbunden.

Weitere Einsatzmöglichkeiten für das Zielfernrohr ergeben sich, wenn neben der Anzeigeeinrichtung am oder im Umkehrsystem eine zusätzliche Lichtquelle vorgesehen ist. Damit kann bei Bedarf eine weitere Zielmarke erzeugt und in die rückwärtige Bildebene des Umkehrsystems eingespiegelt werden. Ergänzend oder alternativ kann in der Bildebene des Umkehrsystems ein weiteres Absehen angeordnet sein.

Damit man die Absehen auch noch in der Dämmerung oder bei ungünstigen Lichtverhältnissen gut sehen kann, ist für das Absehen am objektivseitigen Ende des Umkehrsystems und/oder für das weitere Absehen eine schalt- und/oder dimmbare Beleuchtungseinrichtung vorgesehen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen schematischen Längsschnitt durch ein erfindungsgemäßes Zielfernrohr,
- Fig. 2: einen Längsschnitt durch das Zielfernrohr von Fig. 1, mit gegenüber der optischen Achse des Zielfernrohrs verschwenktem Umkehrsystem,
- Fig. 3: eine schematische Teil-Schnittdarstellung einer anderen Ausführungsform eines erfindungsgemäßen Zielfernrohrs.

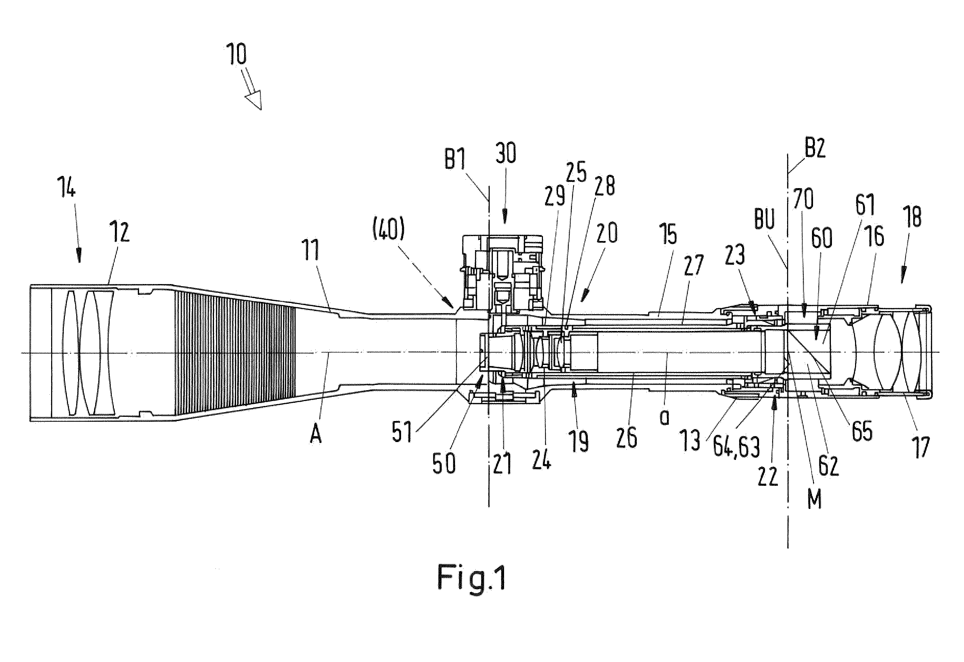

Das in Fig. 1 allgemein mit 10 bezeichnete Zielfernrohr hat ein Gehäuse 11, das entlang einer optischen Achse A einen Objektivtubus 12, ein Mittelrohr 15 und einen Okulartubus 16 aufweist. Im Objektivtubus 12 ist ein Objektivlinsensystem 14 angeordnet, während endseitig im Okulartubus 16 eine verdrehbare Hülse 17 mit einem Okularlinsensystem 18 ausgebildet ist.

Im Strahlengang zwischen dem Objektivlinsensystem 14 und dem Okularlinsensystem 18 ist innerhalb des Mittelrohrs 15 ein Umkehrsystem 20 vorgesehen, das in einem Innentubus 19 angeordnet ist und das mit diesem relativ zur optischen Achse A des Zielfernrohrs 10 verschwenkt werden kann. Dazu ist der Innentubus 19 an seiner dem Okularlinsensystem 18 zugewandten Seite in einem Schwenklager 23 schwenkbar gelagert, während an seinem dem Objektivlinsensystem 14 zugewandten Ende eine Höhenverstelleinrichtung 30 und eine in Fig. 1 mit dem Bezugszeichen 40 nur angedeutete Seitenverstelleinrichtung angreifen, so dass der Innentubus 19 und mit diesem das Umkehrsystem 20 vertikal und horizontal verschwenkt werden kann.

Die Höhenverstelleinrichtung 30 umfasst einen (nicht näher bezeichneten) oberen Verstellturm, der in einem mittleren Bereich auf dem Mittelrohr 15 angeordnet ist, während die Seitenverstelleinrichtung 40 einen um 90° versetzten (nicht dargestellten) seitlichen Verstellturm aufweist. Dieser ist entsprechend seitlich am Mittelrohr 15 angebracht.

Das Umkehrsystem 20 hat zwei Umkehrlinsensysteme 24, 25, die im Innentubus 19 auf einer optischen Achse a angeordnet sind und die zur Veränderung der Vergrößerung des Zielfernrohrs 10 relativ zum Objektiv- und Okularlinsensystem 14, 18 sowie relativ zueinander entlang der optischen Achse a längsverschieblich gelagert sind. Der Innentubus 19 hat dazu eine innere Führungshülse 26 mit einem (nicht näher bezeichneten) parallel zur optischen Achse a des Umkehrsystems 20 verlaufenden Führungsschlitz sowie eine äußere Schneckenhülse 27, die auf dem Außenumfang der Führungshülse 27 sitzt und relativ zu dieser um die optische Achse a des Umkehrsystems drehbar gelagert ist. In der Schneckenhülse 27 sind zwei (gleichfalls nicht näher bezeichnete) schneckenförmige Schlitze ausgebildet. Jedes Umkehrlinsensystem 24, 25 sitzt in einer (nicht bezeichneten) Fassung, die mit einem Mitnehmerstift 28, 29 versehen ist. Jeder Mitnehmerstift 28, 29 greift durch den Führungsschlitz der Führungshülse 26 hindurch in einen der schneckenförmigen Schlitze der Schneckenhülse 27 ein, so dass beim Verdrehen der Schneckenhülse 27 relativ zur Führungshülse 26 die Umkehrlinsensysteme 24, 25 entlang der optischen Achse a des Umkehrsystems 20 verstellt werden. Zum Betätigen der Schneckenhülse 27 ist im Übergang vom Mittelrohr 15 zum Okulartubus 16 ein Verstellring 13 vorgesehen, der drehfest mit der Schneckenhülse 27 verbunden ist.

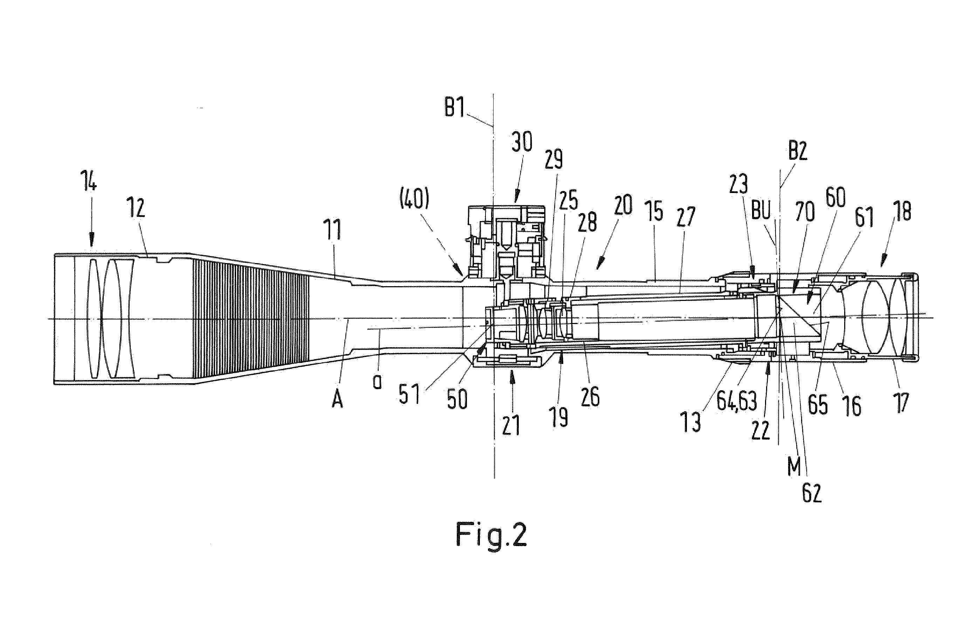

Das Objektivlinsensystem 14 ist derart ausgebildet, dass vor dem Umkehrsystem 20 eine erste Bildebene B1 entsteht, während das Okularlinsensystem 18 hinter dem Linsensystem 24, 25 des Umkehrsystems 20 eine zweite Bildebene B2 erzeugt. Die Bildebenen B1 und B2 sind jeweils senkrecht zur optischen Achse A des Zielfernrohrs 10 ausgerichtet. Das Umkehrsystem 20 hingegen ist derart ausgebildet, dass es mit den Umkehrlinsensystemen 24, 25 im Bereich des okularseitigen Endes 22 eine Bildebene BU erzeugt, die senkrecht zur optischen Achse a des Umkehrsystems 20 ausgerichtet ist. Wie Fig. 1 zeigt, liegt die Bildebene BU des Umkehrsystems 20 planparallel in der zweiten Bildebene B2 des Okularlinsensystems 18, wenn sich das Umkehrsystem 20 in seiner Mittelstellung befindet, d.h. wenn die optische Achse a des Umkehrsystems 20 deckungsgleich mit der optischen Achse A des Zielfernrohrs 10 ist. Verkippt man hingegen das Umkehrsystem - wie Fig. 2 näher zeigt - mittels der Höhen- und Seitenverstelleinrichtung 30, 40 wird die optische Achse a des Umkehrsystems 20 relativ zur optischen Achse A des Zielfernrohrs verschwenkt, wobei das Schwenklager 23, die Positionen der Bildebene BU des Umkehrsystems 20 und die Position der Bildebene B2 des Okularlinsensystems 18 derart aufeinander abgestimmt sind, dass die Mittelpunkte M der Bildebene B2 des Okularlinsensystems 18 und der Bildebene BU des Umkehrsystems 20 stets deckungsgleich im Schnittpunkt der optischen Achsen A bzw. a liegen.

Im Strahlengang zwischen dem Objektivlinsensystem (14) und dem Okularlinsensystem (18) ist eine erste Visierhilfe vorgesehen. Es handelt sich hierbei um ein Absehen 50, das am objektivseitigen Ende 21 des Umkehrsystems 20 angeordnet und bevorzugt als klassische Strichplatte 51 ausgebildet ist. Deren Strukturierung kann je nach Einsatzzweck des Zielfernrohrs verschiedene (nicht dargestellte) Muster aufweisen. Die Strichplatte 51 ist senkrecht zur optischen Achse a des Umkehrsystems in eine Fassung 52 eingesetzt, die drehfest mit der inneren Führungshülse 26 des Innentubus 19 verbunden ist. Befindet sich das Umkehrsystem 20 - wie in Fig. 1 gezeigt - in seiner Mittelstellung und liegt die optische Achse a des Umkehrsystems 20 entsprechend auf der optischen Achse A des Zielfernrohrs 10, dann ist die axiale Position des Absehens 50 bzw. der Stichplatte 51 derart eingestellt, dass sich die Zielmarkierung in der ersten Bildebene B1 befindet. Um eine axiale Justierung des Absehens 50 gegenüber der Bildebene B1 zu ermöglichen, ist die Fassung 52 gegenüber der inneren Führungshülse 26 des Innentubus 19 entlang der optischen Achse a des Umkehrsystems 20 verstellbar ausgebildet.

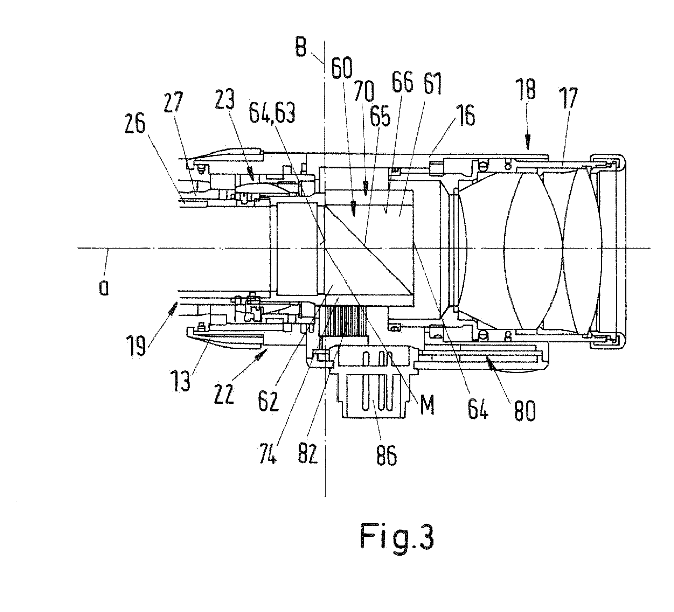

Am okularseitigen Ende 22 des Umkehrsystems 20 ist eine Projektionsvorrichtung 60 vorgesehen (siehe dazu Fig. 3). Dieser ist eine Anzeigeeinrichtung 70 zugeordnet, die mittels einer elektronischen Steuereinrichtung 80 eine (nicht gezeigte) Information und/oder eine (ebenfalls nicht dargestellte) elektronische Zielmarke als zweite Visierhilfe erzeugt, wobei die Information und/oder die Zielmarke über die Projektionsvorrichtung 60 im Sehfeld des Zielfernrohrs 10 projiziert und damit angezeigt werden. Die Projektionsvorrichtung 60 erzeugt dabei eine Projektion, die in einer Projektionsebene 63 liegt. Diese ist senkrecht zur optischen Achse a des Umkehrsystems 20 ausgerichtet und sie liegt in der Bildebene BU des Umkehrsystems 20.

Die Projektionsvorrichtung 60 besteht bevorzugt aus zwei Prismen 61, 62, die mit ihren gegenüber der optischen Achse a des Umkehrsystems 20 geneigten Basisflächen 65 unmittelbar plan aneinander anliegenden. Dabei bilden die Basisflächen 65 eine halbdurchlässige Grenzfläche, die das von der Anzeigeeinrichtung 70 erzeugte Bild unmittelbar in den Strahlengang des Zielfernrohrs 10 einspiegelt, während die dem Objektivlinsensystem 14 zugewandten Stirnseite 64 des vorderen Prismas 62 die Projektionsebene 63 bildet, die mithin ebenfalls stets senkrecht zur optischen Achse a des Umkehrsystems ausgerichtet ist und fest in der Bildebene BU des Umkehrsystems 20 liegt.

Die Prismen 61, 62 sind bevorzugt aus Materialien mit gleichen Brechungsindizes gefertigt und als Quader in eine Fassung 74 eingesetzt. Diese ist drehfest mit der inneren Führungshülse 26 des Innetubus 19 verbunden. Wie Fig. 3 weiter zeigt, liegt die Anzeigevorrichtung 70, beispielweise ein LCD- oder LED-Display, unmittelbar und plan auf einer Seitenfläche des Quaders 61, 62, insbesondere auf einer Seitenfläche 66 des hinteren Prismas 61 auf. Die Fassung 74 ist hierfür mit einer (nicht näher bezeichneten) Aussparung versehen. Dadurch ergibt sich ein ebenso kompakter wie robuster Aufbau.

Man erkennt mithin, dass dem Umkehrsystem 20 eine Anzeigeeinrichtung 70 zugeordnet ist, die über die Projektionsvorrichtung 60 in der Projektionsebene 63 eine Information und/oder eine elektronisch generierte Zielmarke erzeugt. Die Projektionsvorrichtung 60 und die Anzeigeeinrichtung 70 sind in einer gemeinsamen Fassung 74 angeordnet, die mit dem Umkehrsystem 20 verbunden ist, wobei die Projektionsvorrichtung 60 und die Anzeigeeinrichtung 70 gemeinsam mit der Fassung 74 eine bauliche Einheit bilden. Letztere kann bei Bedarf als vormontierte Baueinheit konzipiert werden, was sich günstig auf die Montage des Zielfernrohrs 10 auswirkt.

Befindet sich das Umkehrsystem 20 - wie in Fig. 1 gezeigt - in seiner Mittelstellung und liegt die optische Achse a des Umkehrsystems 20 entsprechend auf der optischen Achse A des Zielfernrohrs 10, dann ist die axiale Position der Stirnseite 64 des Prismas 61 derart eingestellt, dass sich die in der Projektionsebene 63 dargestellten Informationen bzw. Zielmarkierungen in der Bildebene BU des Umkehrsystems und folglich in der zweiten Bildebene B2 des Okularlinsensystems 18 befinden. Um eine axiale Justierung der Projektionsebene 63 bzw. der Stirnfläche 64 des Prismas 62 gegenüber der Bildebene BU zu ermöglichen, ist die Fassung 74 gegenüber der inneren Führungshülse 26 des Innentubus 19 entlang der optischen Achse a des Umkehrsystems 20 verstellbar ausgebildet.

Die (nicht näher dargestellte) elektronische Steuereinrichtung 80 umfasst bevorzugt einen programmierbaren Mikroprozessor, einen Speicher sowie eine geeignete Stromversorgung in Form einer Batterie oder eines Akkus. Der Mikroprozessor führt anhand ballistischer und/oder sonstiger Daten eine Kompensationsberechnung der Flugbahn durch. Die von dem Mikroprozessor errechneten Werte, beispielsweise Entfemungsangaben, oder ein von dem Mikroprozessor errechnete elektronische Zielmarke werden von der Anzeigeeinrichtung 70 angezeigt und über die Projektionsvorrichtung 60 und die Projektionsebene 63 im Sehfeld des Zielfernrohrs eingespiegelt.

Um dem Mikroprozessor die für die Kompensationsberechnung notwendigen oder hilfreichen Daten zur Verfügung zu stellen, weist die elektronische Steuereinrichtung 80 geeignete Schnittstellen auf. Hierbei kann es sich beispielsweise um einen Anschluss für einen in dem Zielfernrohr 10 integrierten (nicht dargestellten) Entfernungsmesser handeln, beispielsweise ein Laser.-Entfernungsmesser. Ergänzend oder alternativ handelt es sich bei der Schnittstelle um einen Stecker 86, an den externe Geräte angeschlossen werden können, beispielsweise ein externer Entfernungsmesser oder ein Windmessgerät. Denkbar ist auch der Anschluss einer Tastatur, über die von Hand Daten in die elektronische Steuereinrichtung 80 eingegeben werden können, beispielsweise Informationen über die verwendete Munition. Sämtliche Daten und Ergebnisse werden in dem Speicher abgespeichert. Die von dem Mikroprozessor errechneten Ergebnisse werden von der Anzeigeeinrichtung 70 angezeigt. Die elektronische Steuereinrichtung 80 und die Anzeigeeinrichtung 70 sind über eine Datenleitung 82 miteinander verbunden. Hierbei handelt es sich bevorzug um ein Flachkabel, das flexibel im Okulartubus 16 verlegt ist. Die elektronische Steuereinrichtung 80 kann auch über eine kabellose Verbindung mit der Anzeigeeinrichtung 70 verbunden sein. Beide Komponenten sind dann entsprechend mit Sendern und Empfängern versehen.

Der wesentliche Vorteil der Erfindung besteht darin, dass der Ort der Projektion für die von der Anzeigeeinrichtung 70 erzeugte Information und/oder für die generierte elektronische Zielmarke fest in die rückseitige Bildebene BU des Umkehrsystems 20 gelegt ist. Der Ort der Projektion ist also nicht die feststehende zweite Bildebene B2 des Okularlinsensystems 18, sondern die mit dem Umkehrsystem 20 verkippende rückwärtige Bildebene BU des Umkehrsystems.

Eine bevorzugte Ausführungsform sieht dabei vor, dass die Projektion der Information bzw. der Zielmarke über eine Projektionseinrichtung 60 erfolgt, die fest mit dem Umkehrsystem 20 verbunden ist und deren Projektionsebene 63 in der rückseitigen Bildebene BU des Umkehrsystems 20 liegt. Die Information, beispielsweise eine Entfernungsangabe, und/oder eine elektronische Zielmarke, die entsprechend einer berechneten ballistischen Flugbahn generiert worden ist, werden über die Anzeigeeinrichtung 70 und die Projektionseinrichtung 60, vorzugsweise einen Strahlteiler, an einer definierten Position im Sehfeld des Zielfernrohrs 10 dargestellt. Dabei ist es möglich, die Zielmarke entsprechend sich verändernden Umgebungsbedingungen im Sehfeld zu variieren.

Wichtig hierbei ist, dass unabhängig von der Verkippung oder Verschwenkung des Umkehrsystems 20 der Ort der Projektion stets in der rückwärtigen Bildebene BU des Umkehrsystems 20 verbleibt. Gleichzeitig bietet das Zielfernrohr 10 die Möglichkeit, unter Beibehaltung der Funktionalität des Zielfernrohrs 10, ein elektronisches Absehen zu realisieren

Wird mithin das Umkehrsystem über den Innentubus 19 vertikal oder horizontal verschwenkt, verkippt die optische Achse a des Umkehrsystems 20 gegenüber der optischen Achse A des Zielfernrohrs. Gleichzeitig verkippt auch die Bildebene BU des Umkehrsystems 20 gegenüber der zweiten Bildebene B2 des Okularlinsensystems 18, wie dies in Fig. 2 zu erkennen ist.

Weil sich jedoch die von der Anzeigeeinrichtung 70 und der Projektionsvorrichtung 60 erzeugten Informationen und/oder Zielmarken in der Bildebene BU des Umkehrsystems 20 befinden, werden diese gemeinsam mit dem von dem Umkehrsystem 20 erzeugten Bild bewegt, d.h. zwischen der rückseitigen Bildebene BU des Umkehrsystems 20 und den eingespiegelten Zielmarken bzw. Informationen treten keine räumlichen Differenzen auf.

Die Erfindung ist nicht auf eine der vorbeschriebenen Ausführungsformen beschränkt, sondern in vielfältiger Weise abwandelbar. So kann die Projektionsvorrichtung 60 beispielsweise von nur einem Prisma 62 gebildet sein, wobei das Prisma 62 mit einer gegenüber der optischen Achse a des Umkehrsystems 20 geneigten Basisfläche 65 eine halbdurchlässige Grenzfläche und mit einer dem Objektivlinsensystem 14 zugewandten Stirnseite 64 die Projektionsebene 63 bildet.

Neben der Anzeigeeinrichtung 70 kann am oder im Umkehrsystem 20 eine zusätzliche Lichtquelle vorgesehen sein. Ferner kann in der Bildebene BU des Umkehrsystems 20 ein weiteres Absehen angeordnet sein. Für das Absehen 50 oder das weitere Absehen kann eine schalt- und/oder dimmbare Beleuchtungseinrichtung vorgesehen sein, die ggf. von der elektronischen Steuereinrichtung 70 gesteuert wird.

Man erkennt, dass ein Zielfernrohr 10 ein Objektivlinsensystem 14, ein Okularlinsensystem 18 und ein im Strahlengang zwischen dem Objektivlinsensystem 14 und dem Okularlinsensystem 18 angeordnetes Umkehrsystem 20 aufweist, wobei das Umkehrsystem 20 mittels einer Höhenverstelleinrichtung 30 und einer Seitenverstelleinrichtung 40 relativ zur optischen Achse A des Zielfernrohrs 10 verschwenkbar gelagert ist. Das Zielfernrohr 10 hat ferner eine erste Visierhilfe in Form eines Absehen 50, das am objektivseitigen Ende 21 des Umkehrsystems 20 angeordnet ist, und eine zweite Visierhilfe in Form einer Projektionsvorrichtung 60, die am okularseitigen Ende 22 des Umkehrsystems 20 angeordnet ist. Um beim Einblenden von ballistischen Informationen und/oder elektronischen Zielmarken Projektionsfehler, insbesondere Parallaxe, zu vermeiden und um bei einem Ausfall der elektronischen Komponenten ein voll funktionsfähiges Zielfernrohr zu erhalten, ist vorgesehen, dass das Umkehrsystem 20 am okularseitigen Ende 22 eine Bildebene BU erzeugt, die senkrecht zur optischen Achse a des Umkehrsystems 20 ausgerichtet ist, dass die Projektionsvorrichtung 60 im Sehfeld des Zielfernrohrs 10 eine Projektion erzeugt, die in einer Projektionsebene 63 liegt, wobei die Projektionsebene 63 senkrecht zur optischen Achse a des Umkehrsystems 20 ausgerichtet ist und in der Bildebene BU des Umkehrsystems 20 liegt, und dass dem Umkehrsystem 20 eine Anzeigeeinrichtung 70 zugeordnet ist, die über die Projektionsvorrichtung 60 in der Projektionsebene 63 eine Information und/oder eine elektronisch generierte Zielmarke erzeugt.

Die Projektionsvorrichtung 60 ist bevorzugt von einem Prisma 62 gebildet, wobei das Prisma 62 mit einer gegenüber der optischen Achse a des Umkehrsystems 20 geneigten Basisfläche 65 eine halbdurchlässige Grenzfläche und mit einer dem Objektivlinsensystem 14 zugewandten Stirnseite 64 die Projektionsebene 63 bildet. Alternativ ist die Projektionsvorrichtung 60 von zwei Prismen 61, 62 gebildet, die mit gegenüber der optischen Achse a des Umkehrsystems 20 geneigten Basisflächen 65 unmittelbar aneinander anliegenden, wobei die Basisflächen 65 eine halbdurchlässige Grenzfläche bilden und wobei eine dem Objektivlinsensystem 14 zugewandte Stirnseite 64 eines Prismas 62 die Projektionsebene 63 bildet.

Die Projektionsvorrichtung 60 und die Anzeigeeinrichtung 70 sind in einer gemeinsamen Fassung 74 angeordnet, die drehfest mit dem Umkehrsystem 20 verbunden ist, aber dennoch , in Richtung der optischen Achse a des Umkehrsystems 20 relativ zum Umkehrsystem 20 bzw. zur Bildebene BU des Umkehrsystems 20 justiert werden kann. Das gleiche gilt für die Anzeigeneinrichtung 70, die jedoch bevorzugt mit einem der Prismen 61, 62 der Projektionseinrichtung 60 verbunden ist. Insgesamt ist es zweckmäßig, wenn die Projektionsvorrichtung 60, die Anzeigeeinrichtung 70 und die Fassung 74 eine bauliche Einheit bilden.

Die Anzeigeneinrichtung 70 wird von einer programmierbaren elektronischen Steuereinrichtung 80 angesteuert, wobei die Steuereinrichtung 80 mittels eine Mikroprozessors anhand ballistischer und/oder sonstiger Daten eine Kompensationsberechnung der Flugbahn durchführt und die entsprechenden Ergebnisse - in Form einer Information und/oder in Form eines elektronischen Absehens - über die Projektionsvorrichtung 60 im Sehfeld des Zielfernrohrs 10 anzeigt. Zum Einlesen der für die Berechnung der Flugbahn notwendigen Daten weist die Steuereinrichtung 80 eine Schnittstelle 86 auf. An dieser können interne Messgeräte oder Sensoren angeschlossen sein. Man kann aber auch externe Geräte anschließen. Die Steuereinrichtung 80 ist über eine kabelgebundene oder eine kabellose Verbindung mit der Anzeigeeinrichtung 70 verbunden.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| A | optische Achse (Zielfernrohr) | 30 | Höhenverstelleinrichtung |
| a | optische Achse (Umkehrsystem) | 40 | Seitenverstelleinrichtung |
| B1 | erste Bildebene | 50 | Absehen |
| B2 | zweite Bildebene | 51 | Strichplatte |
| BU | Bildebene des Umkehrsystems | 52 | Fassung |
| M | Mittelpunkt | 60 | Projektionsvorrichtung |
| | | 61 | Prisma |
| 10 | Zielfernrohr | 62 | Prisma |
| 11 | Gehäuse | 63 | Projektionsebene |
| 12 | Objektivtubus | 64 | Stirnseite |
| 13 | Verstellring | 65 | Basisfläche |
| 14 | Objektivlinsensystem | 66 | Fläche |
| 15 | Mittelrohr | 70 | Anzeigeeinrichtung |
| 16 | Okulartubus | 74 | Fassung |
| 17 | Hülse | 80 | elektronische Steuereinrichtung |
| 18 | Okularlinsensystem | 82 | Datenleitung |
| 19 | Innentubus | 86 | Schnittstelle |
| 20 | Umkehrsystem | | |
| 21 | objektivseitiges Ende | | |
| 22 | okularseitiges Ende | | |
| 23 | Schwenklager | | |
| 24 | Umkehrlinsensystem | | |
| 25 | Umkehrlinsensystem | | |
| 26 | Führungshülse | | |
| 27 | Schneckenhülse | | |
| 28 | Mitnehmerstift | | |
| 29 | Mitnehmerstift | | |

## Patentansprüche

1. Zielfernrohr (10) mit einem Objektivlinsensystem (14), einem Okularlinsensystem (18) und mit einem im Strahlengang zwischen dem Objektivlinsensystem (14) und dem Okularlinsensystem (18) angeordneten Umkehrsystem (20), das mittels einer Höhenverstelleinrichtung (30) und einer Seitenverstelleinrichtung (40) relativ zur optischen Achse (A) des Zielfernrohrs (10) verschwenkbar gelagert ist, mit einem Absehen (50), das am objektivseitigen Ende (21) des Umkehrsystems (20) angeordnet ist, und mit einer Projektionsvorrichtung (60), die am okularseitigen Ende (22) des Umkehrsystems (20) angeordnet ist, **dadurch gekennzeichnet**,
■ dass das Umkehrsystem (20) am okularseitigen Ende (22) eine Bildebene (BU) erzeugt, die senkrecht zur optischen Achse (a) des Umkehrsystems (20) ausgerichtet ist,
■ dass die Projektionsvorrichtung (60) im Sehfeld des Zielfernrohrs (10) eine Projektion erzeugt, die in einer Projektionsebene (63) liegt, wobei die Projektionsebene (63) senkrecht zur optischen Achse (a) des Umkehrsystems (20) ausgerichtet ist und in der Bildebene (BU) des Umkehrsystems (20) liegt, und
■ dass dem Umkehrsystem (20) eine Anzeigeeinrichtung (70) zugeordnet ist, die über die Projektionsvorrichtung (60) in der Projektionsebene (63) eine Information und/oder eine elektronisch generierte Zielmarke erzeugt.

2. Zielfernrohr nach Anspruch 1, **dadurch gekennzeichnet, dass** die Projektionsvorrichtung (60) von zwei Prismen (61, 62) gebildet ist, die mit gegenüber der optischen Achse (a) des Umkehrsystems (20) geneigten Basisflächen (65) unmittelbar aneinander anliegenden, wobei die Basisflächen (65) eine halbdurchlässige Grenzfläche bilden.

3. Zielfernrohr nach Anspruch 2, **dadurch gekennzeichnet, dass** eine dem Objektivlinsensystem (14) zugewandte Stirnseite (64) eines Prismas (62) die Projektionsebene (63) bildet.

4. Zielfernrohr nach Anspruch 2 oder 3, **dadurch gekennzeichnet, dass** die Anzeigeneinrichtung (70) mit einem der Prismen (61, 62) der Projektionseinrichtung (60) verbunden ist.

5. Zielfernrohr nach einem der Ansprüche 1 bis 4, **dadurch gekennzeichnet, dass** die Projektionsvorrichtung (60) und/oder die Anzeigeeinrichtung (70) relativ zur optischen Achse (a) des Umkehrsystems (20) justierbar ausgebildet sind.

6. Zielfernrohr nach einem der Ansprüche 1 bis 5, **dadurch gekennzeichnet, dass** die Projektionsvorrichtung (60) und die Anzeigeeinrichtung (70) in einer gemeinsamen Fassung (74) angeordnet sind, die mit dem Umkehrsystem (20) verbunden ist.

7. Zielfernrohr nach Anspruch 6, **dadurch gekennzeichnet, dass** die Fassung (74) relativ zum Umkehrsystem (20) und zur optischen Achse (a) des Umkehrsystems (20) justierbar ausgebildet ist.

8. Zielfernrohr nach Anspruch 6 oder 7, **dadurch gekennzeichnet, dass** die Projektionsvorrichtung (60), die Anzeigeeinrichtung (70) und/oder die Fassung (74) eine bauliche Einheit bilden.

9. Zielfernrohr nach einem der Ansprüche 1 bis 8, **dadurch gekennzeichnet, dass** die Anzeigeneinrichtung (70) von einer programmierbaren elektronischen Steuereinrichtung (80) angesteuert ist.

10. Zielfernrohr nach Anspruch 9, **dadurch gekennzeichnet, dass** die Steuereinrichtung (80) anhand ballistischer und/oder sonstiger Daten eine Kompensationsberechnung der Flugbahn durchführt.

11. Zielfernrohr nach Anspruch 9 oder 10, **dadurch gekennzeichnet, dass** die Steuereinrichtung (80) eine Schnittstelle (86) zur Übernahme ballistischer Daten aufweist.

12. Zielfernrohr nach einem der Ansprüche 9 bis 11, **dadurch gekennzeichnet, dass** die Steuereinrichtung (80) über eine kabelgebundene oder eine kabellose Verbindung mit der Anzeigeeinrichtung (70) verbunden ist.

13. Zielfernrohr nach einem der Ansprüche 1 bis 12, **dadurch gekennzeichnet, dass** neben der Anzeigeeinrichtung (70) am oder im Umkehrsystem (20) eine zusätzliche Lichtquelle vorgesehen ist.

14. Zielfernrohr nach einem der Ansprüche 1 bis 13, **dadurch gekennzeichnet, dass** in der Bildebene (BU) des Umkehrsystems (20) ein weiteres Absehen angeordnet ist.

15. Zielfernrohr nach einem der Ansprüche 1 bis 14, **dadurch gekennzeichnet, dass** für das Absehen (50) oder das weitere Absehen eine schalt- und/oder dimmbare Beleuchtungseinrichtung vorgesehen ist.
